# EUROPÄISCHE PATENTSCHRIFT

(11) **EP 1 799 430 B1**
(45) Veröffentlichungstag und Bekanntmachung des Hinweises auf die Patenterteilung: **10.02.2010**
(21) Anmeldenummer: 05779391.1
(22) Anmeldetag: 31.08.2005
(51) Int. Cl.: B29C 51/26, B29C 51/32

(54) **PRESSVERFORM-WERKZEUG SOWIE VERFAHREN ZUR HERSTELLEUNG EINES BAUTEILS DURCH PRESSVERFORMUNG**
PRESS MOULDING TOOL AND METHOD FOR PRODUCTION OF A COMPONENT BY PRESS MOULDING
OUTIL DE MOULAGE PAR PRESSION ET PROCEDE POUR FABRIQUER UNE PIECE PAR MOULAGE PAR PRESSION

(30) Priorität: 18.09.2004 DE 102004045398; 18.09.2004 DE 102004045400; 18.09.2004 DE 102004045399
(43) Veröffentlichungstag der Anmeldung: 27.06.2007
(73) Patentinhaber: Faurecia Innenraum Systeme GmbH, 76767 Hagenbach (DE)
(72) Erfinder: SCHILLES, Wilfried, 539 09 Zülpich Schwerfen (DE)
(74) Vertreter: Schatt, Markus F.
(86) Internationale Anmeldenummer: PCT/DE2005/001525
(87) Internationale Veröffentlichungsnummer: WO 2006/029590

(56) Entgegenhaltungen:
- GB-A- 1 440 935
- GB-A- 1 505 255
- JP-A- 51 102 059
- US-A- 6 136 415

## Beschreibung

Die Erfindung betrifft ein Pressverform-Werkzeug sowie ein Verfahren zur Herstellung eines Bauteils durch Pressverformung.

Aus der GB-A-1 440 935 ist ein Verfahren zur Herstellung eines Bauteils durch Press-Verformung zweier Material-Schichten bekannt, die von drei Spannrahmenelementen gehalten werden, während die Werkzeugteile relativ zueinander unter Verformgung der ersten und der zweiten Schicht im Bereich der Verformungskonturen der Werkzeugteile zusammengefahren werden. Anschließend werden die Werkzeugteile und die Spannreahmen-Elemente auseinandergefahren, um die miteinander verbundene erste und zweite Schicht aus dem Werkzeug herausnehmen zu können.

Aus der US-A-6 136 415 ist eine Vorrichtung zur Herstellung eines Bauteils aus zwei Schichten mittels zwei Werkzeugteilen bekannt, die jeweils eine dreidimensionale Verformungskontur aufweisen. Die Werkzeugteile sind in einem Druck-Geber eingespannt, um diese relativ zueinander zu verfahren. Weiterhin werden drei Spannrahmen-Elemente verwendet, um die Schichten während des Verformungsvorganges außerhalb des Konturbereichs des Werkzeugs in vorbestimmter Weise zu halten.

Zur Herstellung derartiger Bauteile ist aus dem Stand der Technik bekannt, ein Oberwerkzeug und ein Unterwerkzeug zu verwenden, um eine Träger-Schicht und eine Dekorations- Schicht durch Zusammenpressen in eine vorbestimmte Bauteilform zu verformen und miteinander zu verbinden. Bei der Verformung der Material-Schichten in eine Bauteil-Form mit einer dreidimensionalen Verwölbung oder Kontur, besteht das Problem, dass die Materialien dazu neigen, Falten zu werfen, wenn das Oberwerkzeug und das Unterwerkzeug zusammengefahren werden. Diese Falten werden dann dauerhaft in die Materialien eingepresst und führen zur Unbrauchbarkeit des hergestellten Bauteils. Aus diesem Grund wird ein Spannrahmen verwendet, mit der das Dekomaterial oder die Matte eingeklemmt und einer vorbestimmten Weise gehalten wird, um eine Bildung von Faltenwurf am Bauteil im Bereich zwischen dem Unterwerkzeug und dem Oberwerkzeug zu verhindern.

Bei den gattungsgemäßen Vorrichtungen bzw. bei derartigen einstufigen Herstellungsprozessen werden die Träger- Schicht in Form einer aufgeheizten Matte und die Dekorations- Schicht aufeinander gelegt, bevor sie von Unterwerkzeug und Oberwerkzeug geformt oder von einem gegebenenfalls verwendeten Spannrahmen aneinander gedrückt werden. Bei den Vorrichtungen des Stands der Technik entsteht dabei das weitere Problem, dass sich die zu verformenden und miteinander zu verbindenden Material-Schichten abschnittsweise miteinander verkleben können, wodurch die Material-Schichten dann partiell miteinander verbunden sind. Bei einem späteren Beschnitt von Dekorations-Schicht und Träger-Schicht, bei der ein Überstand der Dekorations-Schicht erreicht werden soll, ist eine Trennung der Material-Schichten abschnittsweise nicht mehr möglich, so dass das Bauteil nicht brauchbar für ein späteres Umbugen der Dekorations-Schicht ist. Gegebenenfalls ist eine aufwendige Nacharbeit erforderlich, um das Bauteil für den vorgesehenen Verwendungszweck tauglich und insbesondere Umbug-tauglich zu machen.

Die Aufgabe der Erfindung ist, ein Verfahren und eine Vorrichtung bereitzustellen, mit dem bzw. mit der ein geeigneter Beschnitt der in die Herstellungs-Vorrichtung eingelegten Material-Schichten erreicht wird.

Diese Aufgabe wird durch die Merkmale der unabhängigen Patentansprüche gelöst. Weitere erfindungsgemäße Ausführungsformen sind in den auf diese rückbezogenen Unteransprüchen beschrieben.

Erfindungsgemäß ist ein Pressverform-Werkzeug zur Herstellung eines Bauteils aus zumindest einer ersten Material-Schicht und einer zweiten Material-Schicht mit zumindest einem ersten Werkzeugteil und einem zweiten Werkzeugteil mit jeweils einer dreidimensionalen Verformungskontur vorgesehen, wobei bei einem Einlegen der ersten Material-Schicht und der zweiten Material-Schicht in die Vorrichtung die Verformungskontur des ersten Werkzeugteils der ersten Material-Schicht und die Verformungskontur des zweiten Werkzeugteils der zweiten Material-Schicht zugewandt ist, wobei die Werkzeugteile in einem Druck-Geber eingespannt sind, um die Verformung der ersten Material-Schicht und der zweiten Material-Schicht sowie die Verbindung der beiden Material-Schichten miteinander durch das Zusammenfahren des ersten und des zweiten Werkzeugteils zu bewirken, sowie mit einer Spannrahmen-Einrichtung, um die Material-Schichten während des Verformungsvorganges außerhalb des Konturbereichs des Werkzeugs in ihrer Schließ-Stellung zu halten. Die Spannrahmen-Einrichtung umfasst ein erstes Spannrahmen-Element, das mittels einer ersten Stell-Einrichtung relativ zum ersten Werkzeugteil beweglich ist, ein zweites Spannrahmen-Element, das mittels einer zweiten Stell-Einrichtung relativ zum zweiten Werkzeugteil beweglich ist, und ein drittes Spannrahmen-Element, das mittels einer dritten Stell-Einrichtung relativ zum ersten oder zweiten Werkzeugteil beweglich und zwischen dem ersten und dem zweiten Spannrahmen-Element angeordnet ist. Das Pressverform-Werkzeug weist zumindest eine Schneid-Einrichtung 100, 200, 300 mit einem in deren Öffnungs- und Schließ-Richtung gesehen segmentweise am Umfang der Werkzeugteile 11, 12 verlaufenden oder diese vollständig umlaufenden Schneid-Element 130, 230, 330 zum Abschneiden eines bei der Pressverformung neben den zwei Werkzeugteilen 11, 12 vorhandenen Überstandes zumindest einer der Material-Schichten auf, das relativ zu zumindest einem der Werkzeugteile beweglich ist.

Die Schneid-Einrichtung kann insbesondere am dritten Spannrahmen-Element angeordnet sein.

Eine Ausführungsform des Schneid-Elements der am dritten Spannrahmen-Element angeordneten Schneid-Einrichtung kann eine Kante des Spannrahmen-Elements sein und das dritte Spannrahmen-Elements relativ zum ersten oder zweiten Werkzeugteil in deren geschlossener Stellung derart beweglich ist, dass die Kante mit einem entsprechenden Anlagebereich des ersten bzw. zweiten Werkzeugteils zusammenwirkt, um einen Überstand der ersten oder zweiten Material-Schicht abtrennen zu können. Am dritten Spannrahmen-Element kann alternativ oder zusätzlich eine Schneid-Einrichtung mit einem Messer angeordnet sein, das mittels einer Stelleinrichtung auf dem dritten Spannrahmen-Element und quer zur Öffnungs- und Schließ-Bewegung der Werkzeugteile beweglich ist, um einen Überstand der ersten oder zweiten Material-Schicht abtrennen zu können. Das Schneid-Element der am dritten Spannrahmen-Element angeordneten Schneid-Einrichtung kann bei einer entsprechenden Gestaltung der Schneid-Einrichtung derart positionierbar sein, dass beim Zusammenfahren der Werkzeuge das Nachfliessen der in die Spannrahmen eingelegten Material-Schichten nicht behindert wird.

Alternativ oder zusätzlich zu der am dritten Spannrahmen-Element angeordneten Schneid-Einrichtung kann eine Schneid-Einrichtung am ersten und/oder zweiten Spannrahmen-Element mit einem Schneid-Element angeordnet sein. Das Schneid-Element kann insbesondere ein an diesem Spannrahmen-Element mittels einer Stelleinrichtung angeordnetes Messer sein, das in einem Winkel zur oder in-Richtung der Öffnungs- und Schließ-Bewegung der Werkzeugteile beweglich ist. Die Schneid-Einrichtung kann derart ausgeführt sein, dass in der Schließ-Stellung der Spannrahmen-Elemente das Messer derart positionierbar ist, dass dieses in seiner Ausgangsstellung die in den Spannrahmen eingelegten Material-Schichten nicht berührt. Dabei kann das Messer in seiner Schneid-Stellung das erste bzw. zweite Spannrahmen-Element zumindest teilweise durchragen.

Generell kann das Schneid-Element der Schneid-Einrichtung mittels einer Heiz-Einrichtung beheizbar sein. Die Heiz-Einrichtung des Schneid-Elements kann eine Aufnahme für zumindest eine in diese einsetzbare Heizpatrone oder eine elektrische Widerstands-Heizung aufweisen.

Generell kann die Beweglichkeit des Messers durch einen elektrischen, hydraulischen oder pneumatischen Antrieb oder durch eine manuelle Betätigungs-Einrichtung bewerkstelligt sein.

Zumindest einem der beiden Spannrahmen kann eine Einrichtung zur Temperierung des Spannrahmens zugeordnet sein.

Erfindungsgemäß ist auch ein Verfahren zur Herstellung eines Bauteils durch Press-Verformung einer ersten und einer zweiten Material-Schicht vogesehen, bei der eine Verbindung der beiden Schichten innerhalb der Verformungskonturen zweier Werkzeugteile durch deren Zusammenfahren erfolgt, wobei in einer Ausgangsstellung das erste und das zweite Werkzeugteil auseinander gefahren ist, mit folgenden Schritten:
(a) Fahren eines ersten Spannrahmen-Elements und eines zweiten Spannrahmen-Elements in eine zueinander ausgefahrene Stellung und Einlegen der ersten Material-Schicht zwischen die beiden Werkzeugteile und zwischen das erste und ein zwischen dem ersten und dem zweiten Spannrahmen-Element angeordnetes drittes Spannrahmen-Element und Einlegen der zweiten Material-Schicht zwischen die beiden Werkzeugteile und zwischen das zweite und das dritte Spannrahmen-Element, wobei das erste, zweite und das dritte Spannrahmen-Element außerhalb der verformenden Kontur der Werkzeugteile angeordnet sind,
(b) Zusammenfahren des ersten, zweiten und des dritten Spannrahmen-Elements in eine Stellung, in der die erste und die zweite Material-Schicht durch das erste Spannrahmen-Element und das dritte Spannrahmen-Element bzw. das zweite Spannrahmen-Element und das dritte Spannrahmen-Element gehalten werden,
(c) Zusammenfahren der Werkzeugteile relativ zueinander unter Verformung der ersten und der zweiten Material-Schicht im Bereich der Verformungskonturen der Werkzeugteile,
(d) mittels einer Schneid-Einrichtung Abschneiden eines zwischen dem ersten und dem zweiten Werkzeugteil heraustretenden Überstands zumindest einer der Material-Schichten,
(e) Auseinanderfahren der Werkzeugteile und der Spannrahmen-Elemente, um die miteinander verbundene erste und zweite Material-Schicht aus dem Werkzeug herausnehmen zu können.

Das dritte Spannrahmen-Element kann in eine untere Stellung gefahren werden, so dass sich eine am dritten Spannrahmen-Element angeordnete Schneidkante in geringem Abstand an einer Gegenlage am ersten oder zweiten Spannrahmen-Element vorbeibewegt, bei dem der Überstand der an diesem jeweils anliegenden Material-Schicht abgeschnitten wird. Dabei kann das dritte Spannrahmen-Element derart positioniert werden, dass beim Zusammenfahren der Werkzeuge das Nachfliessen der in die Spannrahmen eingelegten Material-Schichten nicht behindert wird.

Ein an dem dritten Spannrahmen-Element angeordnetes bewegliches Messer kann auf den zwischen dem ersten und dem zweiten Werkzeugteil heraustretenden Überstand der jeweiligen Material-Schicht zu bewegt werden, bis dieses die Material-Schicht durchtrennt. Dabei kann ein Schneid-Element einer am ersten und/oder zweiten Spannrahmen-Element angeordneten Schneid-Einrichtung in der Schließ-Stellung der Spannrahmen-Elemente derart positioniert werden, dass dieses in seiner Ausgangsstellung die in den Spannrahmen eingelegten Material-Schichten nicht berührt.

Im folgenden wird die Erfindung anhand der beiliegenden Figuren beschrieben, die zeigen:
- Figur 1 eine Ausführungsform der erfindungsgemäßen Herstellungs-Vorrichtung in einer ersten oder Grund-Stellung, in der sich das Formwerkzeug in einer offenen Stellung befindet und ein erstes und ein zweites Spannrahmen-Element von drei Spannrahmen-Elementen auseinandergefahren sind, wobei die Herstellungs-Vorrichtung eine Schneid-Vorrichtung am dritten oder mittleren Spannrahmen-Element angeordnet ist;
- Figur 2 die Ausführungsform der erfindungsgemäßen Herstellungs-Vorrichtung nach der Figur 1 in einer Werkzeug-Schließstellung mit Schneid-Vorrichtung in dem Zustand vor dem Schneid-Vorgang;
- Figur 3 die Ausführungsform der erfindungsgemäßen Herstellungs-Vorrichtung nach der Figur 1 in einer Werkzeug-Schließstellung mit der erfindungsgemäßen Schneid-Vorrichtung in dem Zustand nach dem Schneid-Vorgang;
- Figur 4 die Ausführungsform der erfindungsgemäßen Herstellungs-Vorrichtung nach der Figur 1 in einer Werkzeug-Schließstellung mit einer zweiten Ausführungsform einer am mittleren Spannrahmen-Element angeordneten Schneid-Vorrichtung in dem Zustand vor dem Schneid-Vorgang;
- Figur 5 die Ausführungsform der erfindungsgemäßen Herstellungs-Vorrichtung nach der Figur 1 in einer Werkzeug-Schließstellung mit der zweiten Ausführungsform der erfindungsgemäßen Schneid-Vorrichtung in dem Zustand nach dem Schneid-Vorgang sowie mit einer weiteren, an einem ersten Spannrahmen-Element angeordneten Schneid-Vorrichtung.

Das erfindungsgemäße Pressverform-Werkzeug bzw. das Verfahren zur Herstellung eines Bauteils durch Pressverformung betrifft die Herstellung eines Bauteils aus zumindest einer ersten 1 und zumindest einer zweiten 2 Material-Schicht. Die Schichten können z.B. eine Dekorations-Schicht und eine Träger-Schicht sein. Mit dem Werkzeug bzw. dem Verfahren erfolgt eine Verformung der ersten und der zweiten Schicht sowie die Verbindung der beiden Schichten miteinander durch das Zusammenfahren eines ersten, der ersten Material-Schicht zugewandten Werkzeugteils und eines zweiten, der zweiten Material-Schicht zugewandten Werkzeugteils des Pressverform-Werkzeugs erfolgt. Generell können beide Schichten mehrschichtig sein, wobei auch mehrere Schichten der ersten oder der zweiten Schicht mit dem Verfahren bzw. der Vorrichtung nach der Erfindung verformt und miteinander verbunden werden können. In der nachfolgenden Beschreibung wird eine zur Anlage an den konturgebenden Bereich des ersten Werkzeugteils bestimmte ein- oder mehrschichtige Material-Schicht als erste Material-Schicht bezeichnet. Analog wird eine zur Anlage an den konturgebenden Bereich des zweiten Werkzeugteils bestimmte ein- oder mehrschichtige Material-Schicht nachfolgend als zweite Material-Schicht bezeichnet. Generell sind die erste und die zweite Material-Schicht Schichten, die sich unter Druck miteinander verbinden, z.B. zumindest bereichsweise verschmelzen oder verkrallen lassen.

Vorzugsweise ist eine der beiden Material-Schichten im herzustellenden Bauteil eine Dekorations-Schicht und die andere der beiden Schichten eine Träger-Schicht. Nachfolgend werden Ausführungsformen der Erfindung beschrieben, bei denen die erste Material-Schicht eine Dekorations-Schicht und die zweite Material-Schicht eine Träger-Schicht ist. Es ist jedoch auch möglich, dass umgekehrt die erste Material-Schicht eine Träger-Schicht und die zweite Material-Schicht eine Dekorations-Schicht ist. Auch muß nicht eine der beiden Schichten eine Dekorations-Schicht oder Träger-Schicht sein. Beispielsweise kann es sich bei der ersten und der zweiten Schicht um zwei Träger-Schichten oder zwei Zwischen-Schichten oder eine Träger-Schicht und eine Verstärkungs-Schicht, wie z.B. eine Schicht aus Glasfaser-Gewebe handeln.

Bei der Herstellung des Bauteils mit einer Träger-Schicht und einer Dekorations-Schicht müssen die einander zugewandten Seiten der Dekorations-Schicht und der Träger-Schicht miteinander durch von dem Werkzeug ausgeübten Druck und gegebenenfalls unter Anwendung von Wärme miteinander verbindbar sein. Dazu kann die der Träger-Schicht zugewandte Material-Schicht der Dekorations-Schicht die Eigenschaft aufweisen, sich mit der Träger-Schicht unter Druck mechanisch zu verbinden, z.B. durch mechanische Verkrallung von an der genannten Seite der Dekorations-Schicht angebrachten Fäden oder Haaren mit der gegebenenfalls angeschmolzenen Oberfläche der Träger-Schicht. Dazu kann zumindest die der Träger-Schicht zugewandte Oberfläche der Dekorations-Schicht aus einem Gewebe gebildet sein, das z.B. ein Vlies, ein Filz, ein Flachgewebe, ein Rundstrick, sein kann. Eine Verbindung von Dekorations-Schicht mit der Träger-Schicht kann auch durch Verschmelzen der einander zugewandten Oberflächen unter Anwendung von Druck durch das Werkzeug und gegebenenfalls unter Anwendung von Wärme erfolgen. Ein Verschmelzen wird erreicht, wenn die Dekorations-Schicht Schaum-Bestandteile enthält, die zur gleichen Material-Familie gehören wie die zur Verschmelzung vorgesehene Träger-Schicht.

Als Dekorations-Schicht kann dabei ein textiles Gewebe, ein Schaum-Kunstleder, eine Kunststoff-Folie oder ein Leder verwendet werden. Bei der Verwendung eines textilen Gewebes als Dekorations-Schicht kann für das Ausgangsmaterial eine Schicht aus textilen Materialien oder Folien oder eine Kombination aus beiden oder eine Kombination der genannten Alternativen verwendet werden. Eine Dekorations-Schicht kann bei dem herzustellenden Bauteil auch dazu vorgesehen sein, die Haptik-Eigenschaften des Endprodukts auf der entsprechenden Seite des Bauteils zu optimieren. Dazu kann die Dekorations-Schicht auch Schaum-Bestandteile aufweisen. Beispielsweise kann die Dekorations-Schicht ein Verbund aus textilen Materialien, einem Schaum und einem Vlies-Material sein. Als Schaum kann ein PP-Schaum oder PE-Schaum oder ein auf PU aufbauender Schaum verwendet werden.

Als Träger-Schicht ist insbesondere ein Kunststoff und speziell eine Polypropylen (PP)-gebundene Fasermatte vorgesehen. Diese kann insbesondere durch Wärmezfuhr plastifizierbar sein. Die Träger-Schicht ist vorzugsweise aus einem Fasermaterial, vorzugsweise aus Naturfasern oder Glasfasern sowie aus Kunststoff-Fasern und insbesondere Polypropylen (PP)-Fasern gebildet. Die Naturfasern können aus Flachs oder Kenaf, Sisal, Leinen oder Baumwolle gebildet sein. In diesem Fall werden diese Fasern in einem vorbereitenden oder einem dem Verfahren vorangehenden Schritt zu einer Matte geformt. Anschließend werden unter Anwendung von Druck und Temperatur unter Aufschmelzung des Kunststoff-Anteiles ein miteinander verbundenes plastisches Matten-Material als eine erste oder zweite Schicht gebildet.

Nachfolgend wird die Erfindung an Hand einer Ausführungsform eines Pressverform-Werkzeugs mit einer Schneid-Einrichtung bzw. eines Verfahrens zur Herstellung eines Bauteils durch Pressverformung und mit einem Schneid-Vorgang beschrieben, auf die die erfindungsgemäße Schneid-Vorrichtung anwendbar ist. Das erfindungsgemäße Pressverform-Werkzeug zur Herstellung eines Bauteils aus zumindest einer ersten Material-Schicht 1, in der beschriebenen Ausführungsform eine Dekorations-Schicht, und einer zweiten Material-Schicht 2, in der beschriebenen Ausführungsform eine Träger-Schicht, ist ein die Kontur des aus den Material-Schichten herzustellenden Bauteils bestimmendes Formwerkzeug 10 mit zumindest einem ersten, der ersten Schicht zugewandten Werkzeugteil 11 mit einer dreidimensionalen Verformungskontur 13 und einem zweiten, der zweiten Schicht zugewandten Werkzeugteil 12 mit einer dreidimensionalen Verformungskontur 14 auf. Die Werkzeugteile 11, 12 werden von einem Druck-Geber (nicht dargestellt) zueinander bewegt, um die Verformung der ersten Material-Schicht 1 bzw. der Dekorations-Schicht und der zweiten Material-Schicht 2 bzw. der Träger-Schicht sowie die Verbindung der beiden Material-Schichten 1, 2 miteinander durch das Zusammenfahren des ersten und des zweiten Werkzeugteils 11 bzw. 12 zu bewirken. Das erste Werkzeugteil 11 kann an einem ersten Werkzeughalter oder einer Montageplatte 15 und zweite Werkzeugteil 12 kann an einem zweiten Werkzeughalter oder einer Montageplatte 16 angebracht sein.

Das erfindungsgemäße Pressverform-Werkzeug weist weiterhin eine Spannrahmen-Einrichtung 20 mit zueinander und gegenüber den Werkzeugteilen 11, 12 beweglichen Spannrahmen-Elementen auf, um die Material-Schichten 1, 2 während des Verformungsvorganges außerhalb des Konturbereichs des Werkzeugs in vorbestimmter Weise zu halten. Diese umfasst ein erstes Spannrahmen-Element 21, das mittels einer ersten Stell-Einrichtung 31 relativ zum ersten Werkzeugteil 11 beweglich ist, ein zweites Spannrahmen-Element 22, das mittels einer zweiten Stell-Einrichtung 32 relativ zum zweiten Werkzeugteil 12 beweglich ist, ein drittes Spannrahmen-Element 23, das mittels einer dritten Stell-Einrichtung 33 relativ zum ersten und/oder zum zweiten Werkzeugteil 11 beweglich ist. Die Beweglichkeit der Spannrahmen 31, 32, 33 bezieht sich zumindest auf die Beweglichkeit in Richtung der Öffnungs- und Schließ-Bewegung der Werkzeugteile 11, 12. Das dritte Spannrahmen-Element 23 ist zwischen dem ersten und dem zweiten Spannrahmen-Element 21 bzw. 22 angeordnet und zwischen diesen beweglich. Die Spannrahmen-Elemente 21, 22 und 23 werden in ihrer Bewegungsrichtung über die Stell-Einrichtungen 31, 32, 33 und/oder über separate Führungen geführt.

Die erste, zweite und dritte Stell-Einrichtung 31, 32 bzw. 33 sind Einrichtungen, die von einer Steuerungs-Einrichtung zur automatischen oder gegebenenfalls zusätzlich über eine Betätigungs-Einrichtung zur manuellen oder halb-automatischen Steuerung des Herstellungs-Prozesses angesteuert werden, um die jeweiligen Spannrahmen-Elemente 21, 22, 23 zu bewegen. Die erste und die dritte Stell-Einrichtung 31 bzw. 33 sind vorzugsweise mit dem ersten Werkzeugteil 11 mechanisch gekoppelt, z.B. indem diese Stell-Einrichtungen 31 bzw. 33 wie auch der erste Werkzeugteil 11 auf einem ersten Werkzeughalter oder einer ersten Montageplatte 15 angeordnet sind. Die erste und die dritte Stell-Einrichtung 31 bzw. 33 können jedoch auch auf einem anderen Träger oder zwei anderen Trägern (nicht gezeigt) angebracht sein, so dass in diesem Fall deren Ausfahrstellung unabhängig von der Position des ersten Werkzeugteils 11 ist. Die zweite Stell-Einrichtung 32 ist vorzugsweise mit dem zweiten Werkzeugteil 12 mechanisch gekoppelt, z.B. indem diese auf einem zweiten Werkzeughalter oder einer zweiten Montageplatte 16 angebracht ist. Die zweite Stell-Einrichtung 32 kann jedoch auch auf einem von der Position des zweiten Werkzeugteils 12 unabhängigen Träger (nicht gezeigt) angeordnet sein, so dass in diesem Fall deren Ausfahrstellung unabhängig von der Position des zweiten Werkzeugteils 12 ist.

Das dritte Spannrahmen-Element 33 ist in der relativen Verschiebungsrichtung der Werkzeugteile 11, 12 gesehen zwischen dem ersten und dem zweiten Spannrahmen-Element 31 bzw. 32 dergestalt angeordnet, dass zwischen den einander zugewandten, zur Anlage der ersten bzw. zweiten Material-Schicht vorgesehenen Konturen der jeweiligen Spannrahmen-Elemente zumindest abschnittsweise die erste bzw. zweite Material-Schicht gelegen sein kann. Vorzugsweise ist vogesehen, dass sich das dritte Spannrahmen-Element 33 im Herstellungsprozeß zwischen den Stellungen des ersten und dem zweiten Spannrahmen-Elements bewegt.

Die Spannrahmen-Elemente sind jeweils außerhalb der konturgebenden Bereiche der Werkzeugteile 11, 12 angeordnet. Diese können einteilig gebildet sein und als die Werkzeugteile 11, 12 umlaufende Gebilde gestaltet sein. Die Spannrahmen-Elemente können auch entlang des Umfangs oder entlang eines Bereichs des Umfangs der Werkzeugteile 11, 12 mehrteilig gebildet sein. Auch kann ein Spannrahmen-Element aus zwei Teilen gebildet sein, die an Stellen außerhalb der Werkzeugteile 11, 12 angeordnet sind. Diese Stellen können insbesondere einander diametral gegenüber liegen. Auch können mehrere, z.B. drei oder vier Teile eines Spannrahmen-Elements außerhalb des Umfangs des jeweiligen Werkzeugteils 11 bzw. 12 oder der Werkzeugteile 11, 12 je nach Anwendungsfall regelmäßig oder unregelmäßig um diesen herum verteilt, angeordnet sein.

Die Spannrahmen-Elemente können unterschiedlich gebildet sein. Die Bauweise und Anordnung der Spannrahmen-Elemente richtet sich nach Art, Material und Gestalt des herzustellenen Bauteils bzw. nach Art, Material und Gestalt der Materialien.

Die Spannrahmen-Elemente 31, 32, 33 weisen jeweils einen Anlagebereich oder zwei Anlagebereiche auf, der bzw. die bei der Herstellung des Bauteils dazu vorgesehen ist bzw. sind, dass ein Überstand-Bereich der ersten bzw. zweiten Material-Schicht an diesen bzw. diese anlegbar ist. Das erste Spannrahmen-Element 21 und das zweite Spannrahmen-Element 22 weisen jeweils einen Anlagebereich auf, während das dritte Spannrahmen-Element 23 zwei Anlagebereiche aufweist. Der Anlagebereich 21 a des ersten Spannrahmen-Elements 21 ist einem ersten Anlagebereich 23a des dritten Spannrahmen-Elements 23 zugewandt. Diese Anlagebereiche 21 a bzw. 23a sind jeweils derart gestaltet, dass ein Aufnehmen eines Überstandbereichs der zur Aufnahme vorgesehenen Material-Schicht 1 bzw. 2 nach einem entsprechenden Zusammenfahren der Spannrahmen-Elemente 21 und 23 erreichbar ist. Das Aufnehmen kann ein Klemmen oder ein Haltens insbesondere mit der Möglichkeit eines Nachfliessens der Material-Schichten 1, 2 oder eine Kombination dieser Funktionen beinhalten. Analoges gilt für einen weitere oder zweiten, am dritten Spannrahmen-Element 23 vorgesehenen Anlagebereich 23b und ein diesem zugewandten Anlagebereich 22a des zweiten Spannrahmen-Elementes 22: Diese Anlagebereiche 23b bzw. 22a sind jeweils ebenfalls derart gestaltet, dass ein Aufnehmen eines Überstandbereichs der zur Aufnahme vorgesehenen Material-Schicht 2 bzw. 1 nach einem entsprechenden Zusammenfahren der Spannrahmen-Elemente 23 und 22 erreichbar ist.

Das dritte Spannrahmen-Element 23 ist erfindungsgemäß dazu vorgesehen, die außerhalb der Verformungskonturen 13, 14 der Werkzeugteile 11 bzw. 12 befindlichen Überstandsbereiche der zwei von den jeweiligen Spannrahmen-Elementen gehaltenen Material-Schichten 1, 2 während der Schließbewegung der Werkzeugteile 11, 12 bzw. der Verformung der Material-Schichten 1, 2 durch diese Werkzeugteile 11, 12 voneinander getrennt zu halten. Dadurch wird insbesondere ein Verkleben der Material-Schichten 1, 2 außerhalb der Verformungskonturen 13, 14 vermieden. Auf diese Weise wird ein Nachfließen der Schichten, insbesondere auch in zueinander unterschiedlichem Maße ermöglicht. Außerdem kann nachfolgend ein Bearbeiten der Material-Schichten und insbesondere das Beschneiden der Außenbereiche der Material-Schichten unabhängig voneinander erfolgen. Je nach Anwenundungsfall kann insbesondre durch eine spezielle Beschichtung vorgesehen sein, dass ein Anlagebereich oder mehrere Anlagebereiche das Nachfliessen einer oder beider der Material-Schichten 1, 2 hemmt bzw. hemmen.

Die einander zugewandten Anlagebereiche 21 a, 23a bzw. 23b, 22a müssen nicht zwingend zueinander parallel verlaufen. Die Anlagebereiche 21a, 23a bzw. 23b, 22a können bereichsweise oder über die vollständige Fläche beschichtet oder mit entsprechenden Einsätzen versehen sein, um je nach Erfordernis ein Nachfließen der jeweils zwischen zwei Spannrahmen-Elementen gehaltenen Material-Schicht 1 bzw. 2 erleichtert oder erschwert wird. Um ein Nachfließen einer Material-Schicht 1 bzw. 2 zu erleichtern, können die jeweiligen Anlagebereiche oder auf dieser angeordnete Segmente z.B. Polytetrafluor-Ethylen (PTFE) - Bestandteile enthalten oder eine verhältnismäßig geringe Rauhtiefe aufweisen. Dazu können die jeweiligen Anlagebereiche oder auf dieser angeordnete Segmente auch eine metallische Beschichtung besitzen, die z.B. galvanisch aufgebracht wird. Um ein Nachfließen eine Material-Schicht 1 bzw. 2 zu erschweren, können die jeweiligen Anlagebereiche reibungserhöhende Bestandteile oder Segmente enthalten. Hierzu kann auch eine geeignete Oberflächenstruktur vorgesehen sein.

Die jeweiligen zum Aufnehmen einer Material-Schicht 1 bzw. 2 vorgesehenen Anlagebereiche 21 a, 23a bzw. 23b, 22a oder auf dieser angeordnete Segmente und/oder die Werkzeugteile 11 bzw. 12 können ganz oder bereichsweise mittels einer Temperierungs-Einrichtung temperierbar ausgeführt werden. Dabei können sämtliche Anlagebereiche 21 a, 23a bzw. 23b, 22a oder ein einzelner Anlagebereich oder nur zwei einander zugewandte Anlagebereiche oder auch nur ein Werkzeugteil 11 oder 12 ganz oder bereichsweise temperierbar sein. Die hierfür anordbare Temperierungs-Einrichtung ist derart gestaltet, dass mit dieser eine Temperatur des Anlagebereichs bzw. des Segments konstant oder Zeit- oder Prozess-abhängig einstellbar oder regelbar ist. Die Einstellung kann durch eine Steuerung auch mit Hilfe von Temperatur-Sensoren in dem jeweils zu temperierenden Anlagebereich bzw. Segment realisiert sein. Die alternative Regelung erfolgt auf der Basis der mittels Temperatur-Sensoren erfassten Temperaturen an dem jeweils zu temperierenden Anlagebereich bzw. Segment.

Durch die Temperierung zumindest eines Anlagebereichs bzw. Segments kann das Spiel von Führungen oder Passungen oder die Beabstandung beweglicher Teile optimiert und insbesondere verringert werden, da die Ausdehnungen beweglicher Teile bedingt durch die Temperatur-Veränderungen in vorbestimmten Grenzen einstellbar sind. Auf diese Weise kann die Werkzeug-Genauigkeit, die Betriebssicherheit und Zuverlässigkeit der Herstellungs-Vorrichtung verbessert werden.

Ein weiterer durch die Temperierung zumindest von Bereichen der Anlageflächen bzw. Segmente bzw. zumindest eines Spannrahmen-Elements der Spannrahmen-Einrichtung 20 bzw. eines oder mehrerer der Formwerkzeuge 10 erreichbarer Vorteil leigt darin, dass die Bildung von kondensiertem Wasser auf einer unterkühlten Werkzeug- oder Spannrahmen-Oberfläche verhindert werden kann. Auf diese Weise wird weiterhin verhindert, dass eine Abkühlung der Material-Schichten erfolgt, durch die Verformbarkeit und Verbindbarkeit der Material-Schichten miteinander erschwert und sogar verhindert wird.

Durch die genannte Temperierung ist ein Überhitzen von Bereichen der Anlageflächen bzw. Segmente verhinderbar. Ein derartiges Überhitzen würde insbesondere die Oberflächenstruktur des herzustellenden Bauteils negativ beeinflussen wodurch insbesondere ein gegebenenfalls wünschenswerter Bügel-Effekt wie z.B. eine Anblendung verhindert werden könnte. Deshalb ist es vorteilhaft, bei der Temperierung insbesondere auch durch einen Kühl-Mechanismus eine vorbestimmte Prozess-Temperatur vorzusehen.

Die Temperierung eines oder beider der Werkzeugteile 11, 12, die zusätzlich oder alternativ zur Temperierung von Spannrahmen-Elementen vorgesehen sein kann, kann mittels der vorgenannten Temperierungs-Einrichtung oder mittels einer weiteren Temperierungs-Einrichtung temperierbar sein. Dabei wird jeweils ein Bereich an der Verformungskontur 13 bzw. 14 temperiert, um das für die jeweilige Material-Schicht 1 bzw. 2 verwendete Material in einem vorteilhaft bearbeitbaren Zustand zu bringen oder zu erhalten. Ein weiterer Vorteil ist, dass durch die Temperierung von Teilen der Herstellungs-Vorrichtung eine optimierte Auslegung oder Arbeitsweise derselben erfolgen kann.

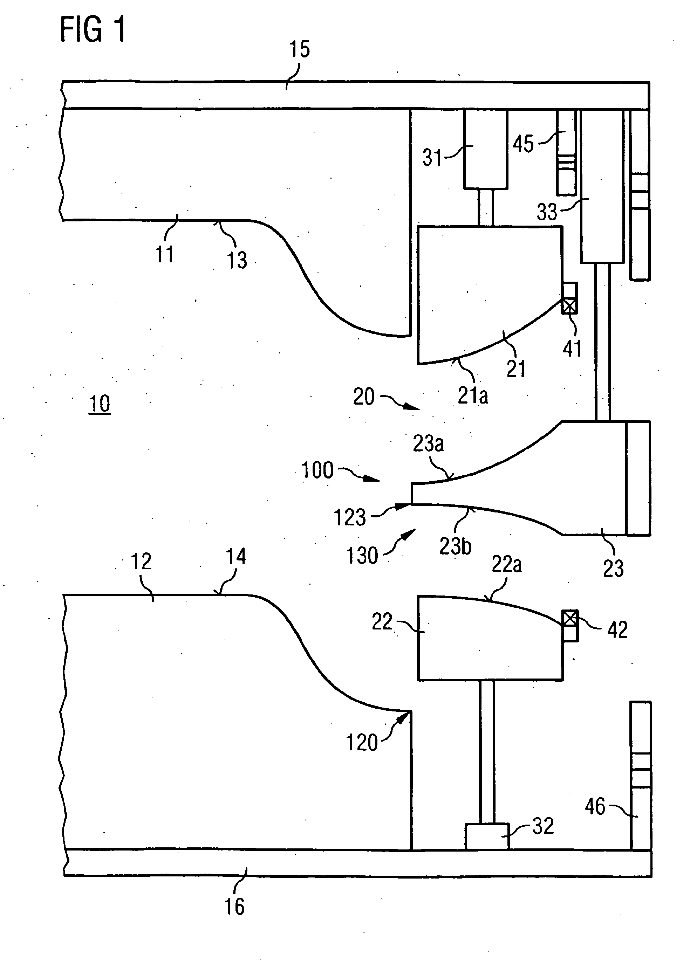

Die Werkzeugteile 11, 12 sind mittels einer Werkzeug-Zustelleinrichtung (nicht dargestellt) zueinander zwischen zwei Stellungen beweglich. Auch ist jedes Spannrahmen-Element 21, 22, 23 mittels jeweils einer entsprechend zugeordneten Stell-Einrichtung 31, 32 bzw. 33 selbstständig beweglich. Durch die mechanische Verbindung mit den Werkzeugen 11, 12 kann die Häufigkeit der erforderlichen Betätigungen der Stell-Einrichtungen verringert werden. Dabei besitzt jedes Spannrahmen-Element 21, 22, 23 zumindest einen Bewegungsbereich, der für die Anwendung der Herstellungs-Vorrichtung zur Herstellung eines Bauteils erforderlich ist. Das dritte Spannrahmen-Element 23 ist zwischen den ausgefahrenen Sellungen des ersten und des zweiten Spannrahmen-Elements 21, 22 (Figur 1) beweglich. Die Stellungen, zwischen denen die Spannrahmen-Elemente beweglich sind, sowie die Stellungen, zwischen denen gleichzeitig die Werkzeugteile beweglich sind, sind derart vorgesehen, dass ein Einlegen der ersten und der zweiten Material-Schicht 1, 2 sowie ein Verformen und Anpressen möglich ist, während gleichzeitig die außerhalb der Verformungskonturen 13, 14 gelegenen Überstand- oder Randbereiche der Material-Schichten 1, 2 auf eine Weise festgehalten werden, dass im Verlauf des Zusammenfahrens der Werkzeugteile 11, 12 zeitweise ein Nachfliessen einer oder beider der Material-Schichten ermöglicht wird.

Die Zustelleinrichtung des dritten Spannrahmen-Elements 23 kann z.B. über den ersten Werkzeughalter 15 an das erste Werkzeugteil 11 oder alternativ z.B. über den zweiten Werkzeughalter 16 an das zweite Werkzeugteil 12 gekoppelt sein.

Die Ausfahrstellungen der Zustelleinrichtungen für die Werkzeugteile oder die Spannrahmen-Elemente können miteinander gekoppelt oder unabhängig voneinander sein. In der dargestellten Ausführungsform der Herstellungs-Vorrichtung ist das erste Werkzeugteil 11 zusammen mit einem Ende der ersten Zustelleinrichtung 31 und der dritten Zustelleinrichtung 33 an dem ersten Werkzeughalter 15 und das zweite Werkzeugteil 12 zusammen mit einem Ende der zweiten Zustelleinrichtung 32 an dem zweiten Werkzeughalter 16 angeordnet. Alternativ kann das dritte Spannrahmen-Element 23 auch an dem zweiten Werkzeughalter 16 angeordnet sein. Alternativ kann eine teilweise oder vollständige Unabhängigkeit der Ausfahrstellungen realisiert sein, z.B. indem die Zustelleinrichtung für das Werkzeug und die Zustelleinrichtung für ein diesem zugeordneten Spannrahmen-Element mechanisch voneinander unabhängig angeordnet oder montiert sind.

Die im Herstellungsverfahren benötigten Stellungen der Zustelleinrichtungen können mittels Sensoren und einem Vergleich der jeweiligen Soll- und Ist-Position in einer entsprechenden Steuerungs-Einrichtung erreicht werden. Dabei kann vorgesehen sein, dass die Sensoren die Position eines entsprechenden Betätigungselements in der jeweiligen Zustelleinrichtung oder die Position des jeweiligen Spannrahmen-Elements bzw. Werkzeugteils selbst erfassen.

In der Ausführungsform der Herstellungs-Vorrichtung nach den Figuren 1ff. werden die für das erfindungsgemäße Verfahren vorgesehenen Einfahr- und Ausfahrstellungen der Spannrahmen-Elemente
- über mechanische Begrenzungs-Elemente zusammen mit der mechanischen Kopplung der Ausfahrstellungen der Spannrahmen-Zustelleinrichtungen mit der Stellung des jeweils zugeordneten Werkzeugteils,
- durch vorzugsweise mechanisch definierte maximale Einfahr- und AusfahrStellungen der drei Spannrahmen-Elemente zusammen mit einem zusätzlichen Begrenzungs-Element für eine Zwischenstellung des dritten Spannrahmen-Elements sowie
- eine Auslegung der dritten Zustelleinrichtung gegenüber der ersten und zweiten Zustelleinrichtung hinsichtlich der durch diese jeweils ausgeübten Stellkraft
erreicht. Bei dieser Ausführungsform braucht jede Stell-Einrichtung gesteuert über eine zugeordnete Steuerungs-Einrichtung nur in einer vorbestimmten Reihenfolge zwischen zwei Endstellungen hin- und hergefahren zu werden, um die für das erfindungsgemäße Herstellungsverfahren bestimmungsgemäße Funktion zu erfüllen. Durch die Einsparung von Senoren und einer Steuerung auf der Basis eines Soll-Ist-Vergleichs für die jeweiligen Ausfahrstellung jeder Zustelleinrichtung ist diese Ausführungsform der Herstellungs-Vorrichtung kostengünstig.

Hierfür sind in der dargestellten Ausführungsform zwei Abstandhalter 41, 42 und zwei längenveränderliche Distanzierungs-Elemente 45, 46 vorgesehen. Die Abstandhalter 41, 42 sind vorgesehen, um jeweils benachbarte Spannrahmen-Elemente 21, 23 bzw. 23, 22 auf einen definierten Abstand relativ zueinander bewegen und auf einen zumindest zu einem bestimmten Zeitpunkt minimalen Abstand voneinander begrenzen zu können. Zu diesem Zweck können an entsprechenden Spannrahmen-Elementen 21, 22, 23 starre oder in Richtung der Bewegungen oder entsprechende Relativbewegungen der Spannrahmen-Elemente höhen- oder längenveränderliche Abstandhalter angeordnet sein. Bei der Verwendung in Bezug auf die Bewegungen der Spannrahmen-Elemente fixierter, also nicht höhenveränderlicher Abstandhalter wird durch das Zusammenfahren der jeweiligen Spannrahmen-Elemente zwischen diesen ein während des Herstellungsverfahrens konstanter Mindestabstand erreicht. Bei der Verwendung höhenveränderlicher Abstandhalter werden die durch die Anschlagelemente definierten Stellungen der Spannrahmen-Elemente durch deren entsprechenden Bewegung angefahren. Im weiteren Verlauf des Verfahrens werden die Abstandhalter in vorbestimmter Weise in ihrer Höhe verändert, so dass sich auch der Abstand der Spannrahmen-Elemente relativ zueinander verändert. Dies kann aufgrund der Schließbewegung der Werkzeugteile und/oder gekoppelt an der Ausfahr-Stellung der jeweiligen Stell-Einrichtung verändert werden. Durch die Abstand-Änderung wird das Nachfließ- und Klemm-Verhalten der Spannrahmen-Elemente in bezug auf die jeweils aufgenommenen Material-Schichten 1, 2 verändert. Dadurch wird erreicht, dass in jeder Stellung der Werkzeugteile ein Nachfließen der von den jeweiligen Spannrahmen-Elementen aufgenommenen Material-Schichten 1 bzw. 2, soweit dies durch die von den Werkzeugteilen 11, 12 bereitgestellte Verformungskontur benötigt wird, gewährleistet ist, um das Bauteil in der vorgesehenen Gestalt, Dicke, Festigkeit faltenfrei herzustellen.

In der Figur 1 ist ein Abstandhalter 41 und ein Abstandhalter 42 dargestellt. Der Abstandhalter 41 ist auf derjenigen Seite des ersten Spannrahmen-Elements 21 angebracht, die dem dritten Spannrahmen-Element 23 zugewandt ist und den Mindestabstand zwischen dem ersten und dem dritten Spannrahmen-Element festlegt. Der Abstandhalter 42 ist auf derjenigen Seite des zweiten Spannrahmen-Elements 22 angebracht, die dem dritten Spannrahmen-Element 23 zugewandt ist und den Mindestabstand zwischen dem zweiten und dem dritten Spannrahmen-Element festlegt. Ebenso könnte der Abstandhalter 41 auf der dem ersten Spannrahmen-Element 21 zugewandten Seite des dritten Spannrahmen-Elements angeordnet sein. Analog könnte der Abstandhalter 42 auf der dem zweiten Spannrahmen-Element 22 zugewandten Seite des dritten Spannrahmen-Elements 23 angeordnet sein.

Bei einer Ausgestaltung der Abstandhalter als höhenveränderliche Abstandhalter sind diese über einen Stellantrieb ausfahrbar, der mit der Steuerungs-Einrichtung funktional verbunden ist, um die phasenweise erforderliche Beabstandung der jeweils zusammenwirkenden Spannrahmen-Elemente durch eine entsprechende momentane Ausfahrstellung des jeweiligen Abstandhalters zu bewirken. Neben einer solchen elektronisch gesteuerten Verstellung der Abstandhalter können diese alternativ auch hydraulisch oder über eine Steuerkurve gesteuert werden. Eine solche Steuerkurve für die Spannrahmen-Elemente berücksichtigt vorzugsweise die jeweiligen Stellungen der Werkzeugteile.

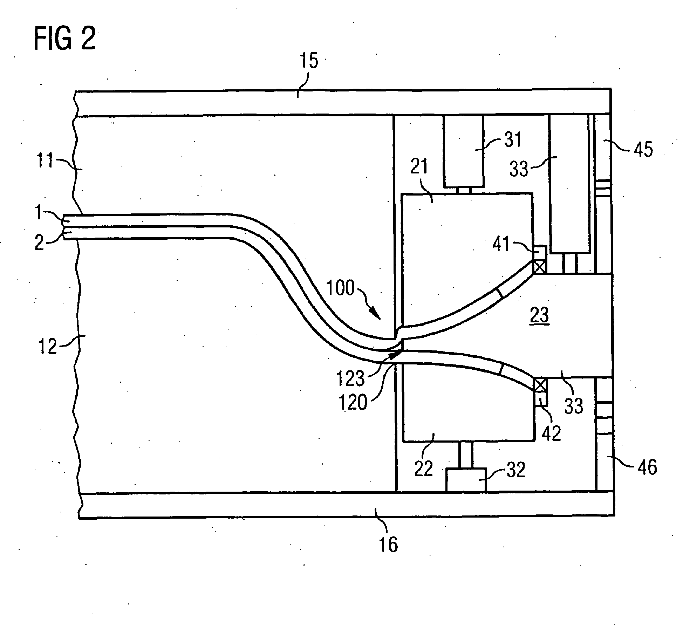

Die Werkzeugteile 11, 12 sind über eine Werkzeug-Zwischenstellung in eine Schließ-Stellung oder Preß-Stellung oder Kaschier-Stellung (Figur 2) bewegbar.

Bei der Vorrichtung bzw. dem Verfahren nach den Figuren 1 bis 7
- sind das erste und das dritte Spannrahmen-Element sowie dass zweite und das dritte Spannrahmen-Element voneinander durch die Abstandhalter 41 bzw. 42 getrennt, und
- ist das dritte Spannrahmen-Element in vorbestimmter Weise zwischen den Distanzierungs-Elemente 45, 46 gehalten, wobei sich das erste und das zweite Distanzierungs-Element 45 bzw. 46 in einer ausgefahrenen Stellung befinden,
so dass die drei Spannrahmen-Elemente 21, 22, 23, voneinander durch die Abstandhalter 41, 42 getrennt und zusammen mit der zwischen diesen gelegenen ersten und zweiten Material-Schicht 1 bzw. 2 in einer Position ist, bei der der am nächsten in Richtung zum zweiten Werkzeugteil 12 gelegene Konturpunkt des zweiten Spannrahmen-Elements 22 innerhalb einer Abweichung auf der Höhe des am nächsten zum zweiten Spannrahmen-Element 21 gelegenen Konturpunkts des zweiten Spannrahmen-Elements 22 gelegen ist, wobei diese Abweichung gleich der zweifachen Dicke der zweiten Material-Schicht 2 beträgt.

Vorzugsweise sind die Werkzeugteile 11, 12 in ihre Schließ-Stellung durch die Stell-Einrichtung der Werkzeugteile 11, 12 gefahren und die Anordnung mit dem ersten, dem zweiten und dem dritten Spannrahmen-Element 21, 22, 23 ist in eine Stellung gefahren, bei der zusätzlich
- der am nächsten in Richtung zum ersten Werkzeugteil 11 gelegene Konturpunkt des ersten Spannrahmen-Elements 21 innerhalb einer Abweichung auf der Höhe des am nächsten zum ersten Spannrahmen-Element 21 gelegenen Konturpunkts des ersten Spannrahmen-Elements 21 gelegen ist, wobei diese Abweichung vorzugsweise gleich der dreifachen Dicke der ersten Material-Schicht 1 beträgt.

Die Schließ-Stellung der Werkzeugteile 11, 12 ist eine Stellung, bei der die erste Material-Schicht 1 und die zweite Material-Schicht 2 miteinander verbindbar sind und bei der gegebenenfallls der für eine solche Verbindung erfoderliche Druck aufbaubar ist.

Die Herstellungs-Vorrichtung kann auch teilweise oder ganz über elektronisch angesteuerte oder überwachte Stell-Einrichtungen betrieben werden, bei denen die Zwischen-Stellungen des dritten Spannrahmen-Elements über Sensoren oder Inkrementar-Geber und einer entsprechenden Steuerungs-Einrichtung erreichbar ist.

Das dritte Spannrahmen-Element kann so gebildet sein, dass dieses eine Material-Schicht oder mehrere Material-Schichten aufnehmen kann, so dass dann mit der Herstellungs-Vorrichtung drei Material-Schichten bzw. mehr als drei Material-Schichten erfindungsgemäß miteinander verarbeitet werden können. Dabei können auch mehrere dritte Spannrahmen-Elemente jeweils mit einer eigenen dritten Stell-Einrichtung vorgesehen sein.

Erfindungsgemäß wird insbesondere gewährleistet, dass ein je nach Anwendungsfall vorzusehendes freies Nachfliessen der Material-Schichten während der Übergänge in die verschiednenen Stellungen der Herstellungs-Vorrichtung ermöglicht wird:

Durch die Beabstandung des ersten von dem dritten Spannrahmen-Element sowie die Beabstandung des zweiten von dem dritten Spannrahmen-Element durch vorzugsweise einstellbarer Abstandshalter 41, 42 und alternativ oder zusätzlich durch eine gesteuerte und optional Weg-überwachte Stellbewegung der drei Spannrahmen-Elemente, die mittels der elektronischen Weg-Steuerung der Stell-Einrichtungen 31, 32, 33 bzw. Spannrahmen-Elemente 21, 22, 23 erfolgt, wird erreicht, dass die erste und/oder die zweite Material-Schicht 1 bzw. 2 je nach dem Erfordernis des Anwendungsfalls beim Schließen des Formwerkzeugs mehr oder weniger nachfließen kann bzw. können. Dabei kann der eingestellte Abstand auch so vorgesehen sein, dass die Material-Schichten 1, 2 geklemmt werden können, d.h. von den jeweiligen Spannrahmen-Eälementen festgehalten werden. Die jeweilige Einstellung kann je nach Anwendungsfall diese Extremzuständen realisieren oder Zustände zwischen diesen Extremzuständen realisieren.

Die in der Endphase des Zusammenfahrens der Werkzeugteile 11, 12 ab einer bestimmten Lage derselben zueinander vorzugsweise vorgesehene Anordnung des dritten Spannrahmen-Elements 23 in einem vom Anwendungsfall abhängigen Abstand relativ zum ersten und/oder zweiten Spannrahmen-Element bewirkt, dass die Material-Schichten 1, 2 von den jeweiligen Spannrahmen-Elementen 21, 23 bzw. 22, 23 gehalten werden oder die Spannrahmen-Elemente ein definiertes Nachfließens der Material-Schichten 1, 2 ermöglichen. Mit der Gewährleistung eines Nachfliessens einer oder mehrerer der Material-Schichten wird erreicht, dass insbesondere bei der Verwendung von Werkzeuteilen mit dreidimesional verlaufenden Verformungs-Kounturen ein Faltenwurf im Bereich der späteren Bauteil-Kontur vermieden wird. Dabei kann die Haltekraft für die erste Material-Schicht 1 bzw. die Freigiebigkeit im Sinne der Ermöglichung eines Nachfließen dieser Material-Schicht 1 unterschiedlich gegenüber der auf die zweite Material-Schicht 2 ausgeübten Haltekraft bzw. erlaubten Freigiebigkeit gewählt werden.

Die erfindungsgemäß vorgesehene Schneid-Vorrichtung ist dazu angeordnet, gegebenenfalls in der Schließ-Stellung der Werkzeugteile 11, 12 aktiviert werden können, um eine oder mehrere der Material-Schichten 1, 2 zuzuschneiden oder zu beschneiden. Dabei kann ein Schneiden abschnittsweise am Umfang der Verformungs-Konturen oder über den gesamten Umfang vorgesehen sein. Auch kann mittels der Schneid-Vorrichtung ein Überstand der ersten und / oder der zweiten Material-Schicht abgeschnitten werden. Auch kann dabei ein Umbug-Überstand für eine oder beide Material-Schichten durch den Schneid-Vorgang gebildet werden, wenn durch das Abschneiden oder Verkürzen einer Material-Schicht 1, 2 gegenüber einer anderen Material-Schicht 2 bzw. 1 die jeweils andere Material-Schicht 2 bzw. 1 gegenüber der weiter abgeschnittenen Material-Schicht übersteht. Der sich dadurch egebende Überstand kann in einem weiteren Verfahrensschritt zu einem Umbug z.B. um die kürzere Material-Schicht verarbeitet werden. Bei der erfindungsgemäßen Vorrichtung ist auch eine einzelne Material-Schicht beschneidbar, da die Material-Schichten außerhalb der Verformungskonturen 13, 14 durch die dritte Spannrahmen-Einrichtung 23 getrennt voneinander gehalten werden. Die Schneid-Einrichtung kann an dem ersten Spannrahmen-Element und/oder dem dritten Spannrahmen-Element zum Abschneiden eines zwischen dem ersten und dem zweiten Werkzeugteil heraustretenden Überstandes der einer Material-Schicht oder mehrerer Material-Schichten angeordnet sein.

Das erfindungsgemäße Pressverform-Werkzeug weist zumindest eine Schneid-Einrichtung 100, 200, 300 mit einem in deren Öffnungs- und Schließ-Richtung gesehen segmentweise am Umfang der Werkzeugteile 11, 12 verlaufenden oder diese vollständig umlaufenden Schneid-Element 130, 230, 330 zum Abschneiden eines bei der Pressverformung neben den zwei Werkzeugteilen 11, 12 vorhandenen Überstandes zumindest einer der Material-Schichten umfasst, das relativ zu zumindest einem der Werkzeugteile 11, 12 beweglich ist. Es können auch mehrere Schneid-Einrichtungen im Pressverform-Werkzeug angeordnet sein.

Die Schneid-Einrichtung kann auf verschiedene Weisen realisiert sein:

Eine Schneid-Einrichtung kann am dritten Spannrahmen-Element 23 angeordnet sein.

In der Figur 1 ist eine Ausührungsform der Schneid-Einrichtung dargestellt, die ein der am dritten Spannrahmen-Element 23 angeordnet ist und ein Schneid-Element 130 in Form einer Kante 123 aufweist, die ein den Werkzeugteilen 11, 12 zugewandtes Teil des Spannrahmen-Elements 23 ist. Dabei ist das dritte Spannrahmen-Element relativ zum ersten oder zweiten Werkzeugteil 11, 12 in deren geschlossener Stellung derart beweglich, dass die Kante 123 mit einem entsprechenden Anlagebereich des ersten bzw. zweiten Werkzeugteils 11, 12 zusammenwirkt, um einen Überstand der ersten oder zweiten Material-Schicht 1, 2 abtrennen zu können.

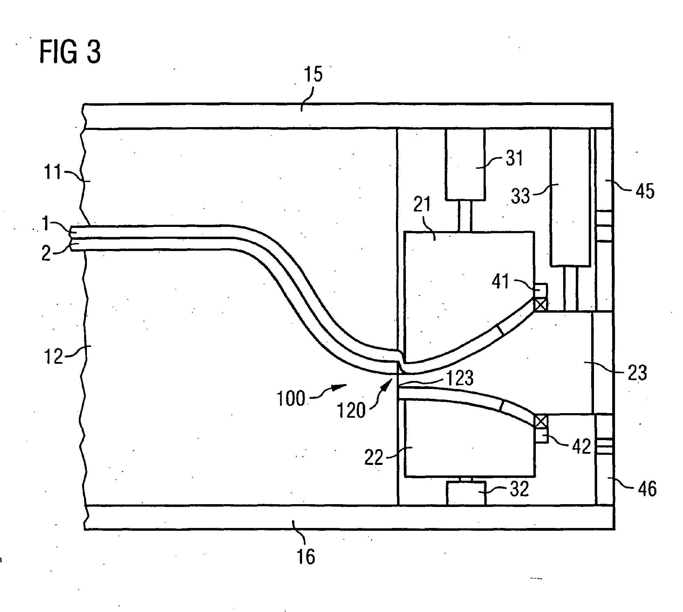

Das Schneid-Element dieser Ausführungsform der Schneid-Einrichtung 100 ist in Richtung der Stell-Bewegung des dritten Spannrahmen-Elements 23 zur Aufnahme der ersten oder zweiten Material-Schicht 1, 2 betätigbar. Die Schneid-Einrichtung 100 ist Bestandteil des dritten Spannrahmen-Elements 23 und zumindest eines Werkzeugteils 11, 12, wobei der Schneid-Vorgang mittels eines Fahrens in vorbestimmte Vorrichtungs-Stellungen erfolgt. Figur 3 zeigt die Herstellungs-Vorrichtung mit einer Stellung der Spannrahmen-Elemente, in der das dritte Spannrahmen-Element 23 bzw. die Schneid-Einrichtung 100 die Schneid-Bewegung ausgeführt hat.

Dazu weist das dritte Spannrahmen-Element ein Schneid-Element 130 in Form einer Vorderkante auf, die als Schneidkante 123 fungiert. Weiterhin ist z.B. der am nächsten zum dritten Spannrahmen-Element 23 gelegene Konturpunkt des - je nach der Anodnung und Beweglichkeit des dritten Spannrahmen-Elements relativ zu den Werkzeugteilen 11, 12 - ersten und / oder zweiten Werkzeugteils 11, 12 als Gegenlage 120 zur Schneidkante 123 und optional zusätzlich als Schneidkante gestaltet. Die Gegenlage ist am ersten Werkzeugteil 11 ausgebildet, wenn mittels der Schneid-Vorrichtung 100 bzw. der Schneidkante 123 die erste Material-Schicht 1 geschnitten werden soll. Alternativ oder zusätzlich ist die Gegenlage 120 am zweiten Werkzeugteil 11 ausgebildet, wenn mittels der Schneid-Vorrichtung 100 bzw. der Schneidkante 123 die zweite Material-Schicht 2 geschnitten werden soll.

Die Vorderkante oder Schneidkante 123 des dritten Spannrahmen-Elements 23 ist derart angeordnet, dass dieses bei einer entsprechenden Stellung des dritten Spannrahmen-Elements 23 zum ersten und / oder zweiten Werkzeugteil 12 bereichsweise nahe an der Außenkontur des Werkzeugteils 12 verläuft und dabei mit einem für den Schneidvorgang geeigneten Abstand von derselben beabstandet ist.

Die Vorderkante 123 am dritten Spannrahmen-Element und/oder die Gegenlage 120 am ersten 11 oder zweiten Werkzeugteil 12 kann gehärtet oder vergütet ausgebildet sein.

Das Schneid-Verfahren mittels der ersten Schneid-Einrichtung 100 bei einem Zusammenwirken der Vorderkante 123 mit dem zweiten Werkzeugteil 12 (Figuren 1 bis 3) ist wie folgt:

Das dritte Spannrahmen-Element 23, das von der dritten Stell-Einrichtung 33 angetrieben wird, wird nach Erreichen der Schließ-Stellung des Formwerkzeugs, bei der bei der Vorrichtung nach dem Figuren 1 bis 3 das dritte Spannrahmen-Element zunächst auf dem ausgefahrenen zweiten Distanzierungs-Element 46 weiterhin aufliegt, durch die dritte Stell-Einrichtung 33 in eine untere Stellung heruntergefahren, so dass sich die Schneidkante in geringem Abstand an der Gegenlage 120 vorbeibewegt. Der Abstand ist derart gewählt, dass der außerhalb der Verformungskonturen der Werkzeugteile liegende Überstand der ersten Material-Schicht 1 durchtrennt oder abgeschnitten werden kann. Dies geschieht in der Ausführungsform der Herstellungs-Vorrichtung nach den Figuren 1 bis 3 durch Einfahren des zweiten Distanzierungs-Elements 46. Die untere Stellung des zweiten Distanzierungs-Elements 46 ist bei dieser Ausführungsform vorzugsweise derart vorgesehen, dass dieses die Bewegung des dritten Spannrahmen-Elements 23 nach dem Schneid-Vorgang nach unten begrenzt. Die erste Stell-Einrichtung 31 kann dabei derart betätigt werden oder betätigbar sein, dass diese die durch die dritte Stell-Einrichtung 33 ausgeübte Schneidkraft unterstützt. Dabei wird das zweite Spannrahmen-Element 22 überdrückt oder vor/mit der Schneidbewegung drucklos geschaltet oder während der Schneidbewegung eingefahren.

Zusätzlich oder alternativ kann die am dritten Spannrahmen-Element 23 angeordnete Schneid-Einrichtung 100 ein Messer 230 umfassen, das mittels einer Stelleinrichtung auf dem dritten Spannrahmen-Element 23 und quer zur Öffnungs- und Schließ-Bewegung der Werkzeugteile 11, 12 beweglich ist, um einen Überstand der ersten oder zweiten Material-Schicht 1, 2 abtrennen zu können.

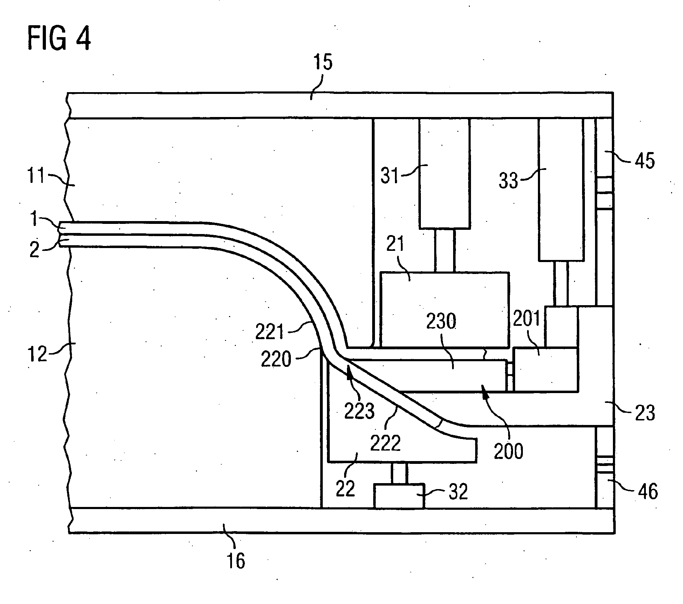

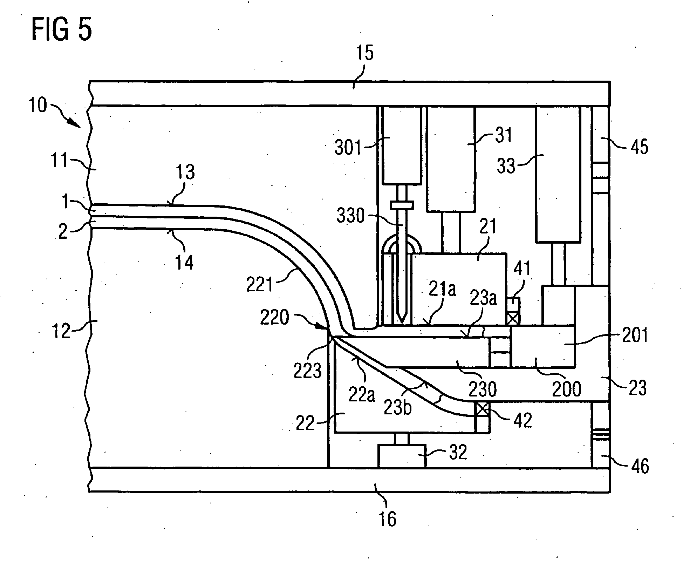

Das Messer 230 dieser Ausführungsform der Schneid-Einrichtung 200 ist winklig oder quer zur Richtung der Stell-Bewegung des dritten Spannrahmen-Elements 23 zur Aufnahme der ersten oder zweiten Material-Schicht 1, 2 betätigbar. Die zweite Schneid-Einrichtung 200 ist Bestandteil des dritten Spannrahmen-Elements 23 oder diesem zugeordnet. In beiden Fällen wird dieses über eine Stell-Einrichtung 201 bewegt oder betätigt zum Abschneiden eines zwischen dem ersten und dem zweiten Werkzeugteil heraustretenden Überstandes der zweiten Material-Schicht 2 (Figuren 4 und 5). Das Messer 230 weist eine dem zweiten Werkzeugteil 12 zugewandte Schneidkante 223 auf.

Aufgrund der Betätigung des Stellantriebs 201 des Messers 230 wird dieses auf einen entsprechenden Randbereich 221 des zweiten Werkzeugteils 12 zubewegt, das als Gegenfläche oder Gegenlage 220 für die dieser zugewandten Schneide des Messers 230 vorgesehen ist. Durch ein entsprechendes Einfahren der zweiten Steil-Einrichtung 32 ist ein Teil des entsprechenden abzuschneidenden Überstands der zweiten Material-Schicht 2 zwischen der Schneide des Messers und dem zweiten Werkzeugteil 12 gelegen. Der Überstand der zweiten Material-Schicht 2 wird dann durch den aufgrund der Zustellbewegung des Messers 230 aufgebrachten Druck abgeschnitten.

Alternativ kann auch ein entsprechender Randbereich 222 des zweiten Spannrahmen-Elements 22 als Gegenlage verwendet werden, so dass dann ein Überstand der zweiten Material-Schicht 2 durch die Schneidkante 223 des Messers 230 und die Gegenlage 222 des zweiten Spannrahmen-Elements 22 abgescnitten werden kann.

Das Schneid-Element der Schneid-Einrichtung 100, 200 kann insbesondere derart positionierbar sein, dass beim Zusammenfahren der Werkzeuge 11, 12 das Nachfliessen der in die Spannrahmen eingelegten Material-Schichten 1, 2 nicht behindert wird.

Alternativ oder zusätzlich zu den genannten Schneid-einrichtungen 100, 200 kann eine Schneid-Einrichtung 300 am ersten 21 und/oder zweiten 22 Spannrahmen-Element mit einem Schneid-Element 330 angeordnet sein. Das Schneid-Element 330 ist ein an dem ersten bzw. zweiten Spannrahmen-Element 21, 22 mittels einer Stelleinrichtung oder Antrieb 301 bewegliches Messer 330. Dieses ist mit einer entsprechenden Führungs-Einrichtung derart geführt, dass dieses in einem Winkel zur oder in Richtung der Öffnungs- und Schließ-Bewegung der Werkzeugteile 11, 12 beweglich ist.

Die an dem ersten bzw. zweiten Spannrahmen-Element 21, 22 gegebenenfalls angeordnete Schneid-Einrichtung 300 kann derart ausgeführt sein, dass in der Schließ-Stellung der Spannrahmen-Elemente 21, 22, 23 das Messer 330 derart positionierbar ist, dass dieses in seiner Ausgangsstellung die in den Spannrahmen eingelegten Material-Schichten 1, 2 nicht berührt.

Die Schneid-Einrichtung 300 kann derart ausgeführt sein, dass das Messer 330 in seiner Schneid-Stellung das erste bzw. zweite Spannrahmen-Element 21, 22 zumindest teilweise durchragt.

Bei den genannten Schneid-Einrichtungen kann das Schneid-Element 130, 230, 330 der Schneid-Einrichtung 300 mittels einer Heiz-Einrichtung beheizbar ist. Dabei kann die Heiz-Einrichtung des Schneid-Elements 130, 230, 330 eine Aufnahme für zumindest eine in diese einsetzbare Heizpatrone aufweisen. Alternativ kann die Heiz-Einrichtung des Schneid-Elements 130, 230, 330 eine elektrische Widerstands-Heizung aufweisen.

Bei einer Ausführungsform der Schneideinrichtung mit einem beweglichen Messer kann die Beweglichkeit des Messers durch einen elektrischen, hydraulischen oder pneumatischen Antrieb ode durch eine manuelle Betätigungs-Einrichtung bewerkstelligt sein.

Generell kann zumindest einem der Spannrahmen 21, 22, 23 eine Einrichtung zur Temperierung des Spannrahmens zugeordnet sein. Durch die optional vorgesehene Temperierung zumindest eines Anlagebereichs bzw. Segments kann das Spiel oder die Beabstandung der Schneidfläche zum zweiten Werkzeugteil, also die Schneid-Passung, optimiert und insbesondere verringert weden.

Erfindungsgemäß ist auch ein Verfahren zur Herstellung eines Bauteils aus zumindest einer ersten 1 oder Dekorations-Schicht und einer zweiten 2 Material-Schicht oder Träger-Schicht vorgesehen, bei dem eine Verformung der ersten 1 und der zweiten 2 Material-Schicht sowie die Verbindung der beiden Material-Schichten 1, 2 miteinander durch das Zusammenfahren eines ersten Werkzeugteils 11 und eines zweiten Werkzeugteils 12 eines Verformungswerkzeugs mit vorzugsweise dreidimensionalen Verformungskonturen erfolgt, wobei die Verformungskontur des ersten Werkzeugteils 11 der ersten Material-Schicht 1 und die Verformungskontur des zweiten Werkzeugteils 12 der zweiten Material-Schicht 2 zugewandt ist, wobei in einer Ausgangsstellung das erste 11 und das zweite 12 Werkzeugteil auseinander gefahren ist. Das erfindungsgemäße Verfahren umfasst folgende Schritte:
- Fahren eines ersten Spannrahmen-Elements 21 und eines zweiten Spannrahmen-Elements 22 in eine zueinander ausgefahrene Stellung und Einlegen der ersten Material-Schicht 1 zwischen die beiden Werkzeugteile 11, 12 und zwischen das erste 21 und ein zwischen dem ersten 21 und dem zweiten 22 Spannrahmen-Element angeordnetes drittes Spannrahmen-Element 23 in einer Einlege-Stellung, wobei das erste, zweite und das dritte Spannrahmen-Element außerhalb der verformenden Kontur der Werkzeugteile 11, 12 angeordnet sind;
- Fahren des dritten Spannrahmen-Elements 23 in eine Halte-Stellung für die erste Material-Schicht 1, in der sich das dritte Spannrahmen-Element 23 in einer vorbestimmten Entfernung zum ersten Spannrahmen-Element 21 befindet, bei der die erste Material-Schicht 1 durch das erste Spannrahmen-Element 21 und das dritte Spannrahmen-Element 23 gehalten wird (Figur 3),
- Auflegen der zweiten Material-Schicht 2 zwischen die beiden Werkzeugteile 11, 12 und auf das zweite Spannrahmen-Element 22 (Figur 4),
- Fahren des zweiten Spannrahmen-Elements 22 in eine Halte-Stellung für die zweite Material-Schicht 2, in der sich das zweite Spannrahmen-Element 2w in einer vorbestimmten Entfernung zum dritten Spannrahmen-Element 23 befindet, bei der die zweite Material-Schicht 2 durch das zweite Spannrahmen-Element 22 und das dritte Spannrahmen-Element 23 gehalten wird (Figur 5),
- Zusammenfahren der Werkzeugteile bis zu relativen Lagen zueinander, bei der die erste 1 und die zweite 2 Material-Schicht verformt werden,
- nach der Verformung Auseinanderfahren der Werkzeugteile und der Spannrahmen-Elemente, um die miteinander verbundene erste und zweite Material-Schicht aus dem Werkzeug herausnehmen.
- nach dem Verformungsvorgang mittels der an dem dritten Spannrahmen-Element angeordneten Schneid-Einrichtung 100 Abschneiden eines zwischen dem ersten und dem zweiten Werkzeugteil heraustretenden Überstands der zweiten Material-Schicht abgeschnitten wird.

Vor dem Einlegen der Material-Schichten 1, 2 zwischen die Werkzeugteile kann ein Erwärmen der ersten oder der zweiten Material-Schicht erfolgen.

## Patentansprüche

1. Pressverform-Werkzeug zur Herstellung eines Bauteils aus zumindest einer ersten Material-Schicht (1) und einer zweiten Material-Schicht (2) mit zumindest einem ersten Werkzeugteil (11) und einem zweiten Werkzeugteil (12) mit jeweils einer dreidimensionalen Verformungskontur, wobei bei einem Einlegen der ersten Material-Schicht (1) und der zweiten Material-Schicht (2) in die Vorrichtung die Verformungskontur des ersten Werkzeugteils (11) der ersten Material-Schicht und die Verformungskontur des zweiten Werkzeugteils (12) der zweiten Material-Schicht zugewandt ist, wobei die Werkzeugteile (11, 12) in einem Druck-Geber eingespannt sind, um die Verformung der ersten Material-Schicht (1) und der zweiten Material-Schicht (2) sowie die Verbindung der beiden Material-Schichten miteinander durch das Zusammenfahren des ersten und des zweiten Werkzeugteils zu bewirken, sowie mit einer Spannrahmen-Einrichtung, um die Material-Schichten während des Verformungsvorganges außerhalb des Konturbereichs des Werkzeugs in ihrer Schließ-Stellung zu halten, wobei:
- die Spannrahmen-Einrichtung ein erstes Spannrahmen-Element (21), das mittels einer ersten Stell-Einrichtung (31) relativ zum ersten Werkzeugteil beweglich ist, ein zweites Spannrahmen-Element (22), das mittels einer zweiten Stell-Einrichtung (32) relativ zum zweiten Werkzeugteil beweglich ist, und ein drittes Spannrahmen-Element (23), das mittels einer dritten Stell-Einrichtung (33) relativ zum ersten oder zweiten Werkzeugteil beweglich und zwischen dem ersten und dem zweiten Spannrahmen-Element angeordnet ist, umfasst, und
- dass das Pressverform-Werkzeug zumindest eine Schneid-Einrichtung (100, 200, 300) mit einem in deren Öffnungs- und Schließ-Richtung gesehen segmentweise am Umfang der Werkzeugteile (11, 12) verlaufenden oder diese vollständig umlaufenden Schneid-Element (130, 230, 330) zum Abschneiden eines bei der Pressverformung neben den zwei Werkzeugteilen (11, 12) vorhandenen Überstandes zumindest einer der Material-Schichten umfasst, das relativ zu zumindest einem der Werkzeugteile (11, 12) beweglich ist,
**dadurch gekennzeichnet, dass** eine Schneid-Einrichtung (100, 200, 300) am dritten Spannrahmen-Element (23) angeordnet ist.

2. Pressverform-Werkzeug zur Herstellung eines Bauteils nach dem Patentanspruch 1, **dadurch gekennzeichnet, dass** das Schneid-Element (130, 230, 330) der am dritten Spannrahmen-Element (23) angeordneten Schneid-Einrichtung (100) eine Kante (123) des Spannrahmen-Elements (23) ist und das dritte Spannrahmen-Elements relativ zum ersten oder zweiten Werkzeugteil (11, 12) in deren geschlossener Stellung derart beweglich ist, dass die Kante mit einem entsprechenden Anlagebereich des ersten bzw. zweiten Werkzeugteils (11, 12) zusammenwirkt, um einen Überstand der ersten oder zweiten Material-Schicht (1, 2) abtrennen zu können.

3. Pressverform-Werkzeug zur Herstellung eines Bauteils nach dem Patentanspruch 1 oder 2, **dadurch gekennzeichnet, das** Schneid-Element (130, 230, 330) der am dritten Spannrahmen-Element (23) angeordneten Schneid-Einrichtung (100) ein angeordnetes Messer (230) umfasst, das mittels einer Stelleinrichtung auf dem dritten Spannrahmen-Element (23) und quer zur Öffnungs- und Schließ-Bewegung der Werkzeugteile (11, 12) beweglich ist, um einen Überstand der ersten oder zweiten Material-Schicht (1, 2) abtrennen zu können.

4. Pressverform-Werkzeug nach dem Patentanspruch 3, **dadurch gekennzeichnet, dass** das Schneid-Element der Schneid-Einrichtung (100, 200) derart positionierbar ist, dass beim Zusammenfahren der Werkzeuge (11, 12) das Nachfliessen der in die Spannrahmen eingelegten Material-Schichten (1, 2) nicht behindert wird.

5. Pressverform-Werkzeug zur Herstellung eines Bauteils nach einem der voranstehenden Patentansprüche, **dadurch gekennzeichnet, dass** die Schneid-Einrichtung (300) am ersten (21) und/oder zweiten (22) Spannrahmen-Element angeordnet ist, und das Schneid-Element (330) ein an diesem Spannrahmen-Element (21, 22) mittels einer Stelleinrichtung angeordnetes Messer (330) ist, das in einem Winkel zur oder in Richtung der Öffnungs- und Schließ-Bewegung der Werkzeugteile (11, 12) beweglich ist.

6. Pressverform-Werkzeug nach dem Patentanspruch 5, **dadurch gekennzeichnet, dass** die Schneid-Einrichtung (300) derart ausgeführt ist, dass in der Schließ-Stellung der Spannrahmen-Elemente (21, 22, 23) das Messer (330) derart positionierbar ist, dass dieses in seiner Ausgangsstellung die in den Spannrahmen eingelegten Material-Schichten (1, 2) nicht berührt.

7. Pressverform-Werkzeug nach einem der Patentansprüche 5 oder 6, **dadurch gekennzeichnet, dass** die Schneid-Einrichtung (300) derart ausgeführt ist, dass das Messer (330) in seiner Schneid-Stellung das erste bzw. zweite Spannrahmen-Element (21, 22) zumindest teilweise durchragt.

8. Pressverform-Werkzeug nach einem der voranstehenden Patentansprüche, **dadurch gekennzeichnet, dass** das Schneid-Element (130, 230, 330) der Schneid-Einrichtung (300) mittels einer Heiz-Einrichtung beheizbar ist.

9. Pressverform-Werkzeug nach dem Patentanspruch 8, **dadurch gekennzeichnet, dass** die Heiz-Einrichtung des Schneid-Elements (130, 230, 330) eine Aufnahme für zumindest eine in diese einsetzbare Heizpatrone aufweist.

10. Pressverform-Werkzeug nach dem Patentanspruch 9, **dadurch gekennzeichnet, dass** die Heiz-Einrichtung des Schneid-Elements (130, 230, 330) eine elektrische Widerstands-Heizung aufweist.

11. Pressverform-Werkzeug nach einem der Patentansprüche 3 bis 10, **dadurch gekennzeichnet, dass** die Beweglichkeit des Messers durch einen elektrischen, hydraulischen oder pneumatischen Antrieb bewerkstelligt ist.

12. Pressverform-Werkzeug nach einem der voranstehenden Patentansprüche 3 bis 10, **dadurch gekennzeichnet, dass** Beweglichkeit des Messers durch eine manuelle Betätigungs-Einrichtung bewerkstelligt ist.

13. Pressverform-Werkzeug nach einem der voranstehenden Patentansprüche, **dadurch gekennzeichnet, dass** zumindest einem der beiden Spannrahmen (21, 22) eine Einrichtung zur Temperierung des Spannrahmens zugeordnet ist.

14. Verfahren zur Herstellung eines Bauteils durch Press-Verformung einer ersten und einer zweiten Material-Schicht, bei der eine Verbindung der beiden Schichten innerhalb der Verformungskonturen (13, 14) zweier Werkzeugteile (11, 12) durch deren Zusammenfahren erfolgt, wobei in einer Ausgangsstellung das erste (11) und das zweite (12) Werkzeugteil auseinander gefahren ist, wobei:
(a) Fahren eines ersten Spannrahmen-Elements (21) und eines zweiten Spannrahmen-Elements (22) in eine zueinander ausgefahrene Stellung und Einlegen der ersten Material-Schicht (1) zwischen die beiden Werkzeugteile und zwischen das erste und ein zwischen dem ersten und dem zweiten Spannrahmen-Element angeordnetes drittes Spannrahmen-Element (23) und Einlegen der zweiten Material-Schicht (2) zwischen die beiden Werkzeugteile und zwischen das zweite (22) und das dritte Spannrahmen-Element (23), wobei das erste, zweite und das dritte Spannrahmen-Element außerhalb der verformenden Kontur der Werkzeugteile angeordnet sind,
(b) Zusammenfahren des ersten (21), zweiten (22) und des dritten (23) Spannrahmen-Elements in eine Stellung, in der die erste (1) und die zweite (2) Material-Schicht durch das erste Spannrahmen-Element und das dritte Spannrahmen-Element bzw. das zweite Spannrahmen-Element und das dritte Spannrahmen-Element gehalten werden,
(c) Zusammenfahren der Werkzeugteile (11, 12) relativ zueinander unter Verformung der ersten und der zweiten Material-Schicht im Bereich der Verformungskonturen (13, 14) der Werkzeugteile (11, 12),
(d) mittels einer Schneid-Einrichtung (100, 200, 300) Abschneiden eines zwischen dem ersten (11) und dem zweiten (12) Werkzeugteil heraustretenden Überstands zumindest einer der Material-Schichten,
(e) Auseinanderfahren der Werkzeugteile (11, 12) und der Spannrahmen-Elemente (21, 22, 23), um die miteinander verbundene erste und zweite Material-Schicht (1, 2) aus dem Werkzeug herausnehmen zu können,
**dadurch gekennzeichnet, dass** das dritte Spannrahmen-Element (23) in eine untere Stellung gefahren wird, so dass sich eine am dritten Spannrahmen-Element (23) angeordnete Schneidkante (123) in geringem Abstand an einer Gegenlage (120) am ersten oder zweiten Spannrahmen-Element (21, 22) vorbeibewegt, bei dem der Überstand der an diesem jeweils anliegenden Material-Schicht abgeschnitten wird.

15. Verfahren zur Herstellung eines Bauteils durch Press-Verformung nach dem Patentanspruch 14, **dadurch gekennzeichnet, dass** das dritte Spannrahmen-Element (21, 22) derart positioniert wird, dass beim Zusammenfahren der Werkzeuge (11, 12) das Nachfliessen der in die Spannrahmen eingelegten Material-Schichten (1, 2) nicht behindert wird.

16. Verfahren zur Herstellung eines Bauteils durch Press-Verformung nach dem Patentanspruch 14, **dadurch gekennzeichnet, dass** ein an dem dritten Spannrahmen-Element (23) angeordnetes bewegliches Messer (230) auf den zwischen dem ersten und dem zweiten Werkzeugteil heraustretenden Überstand der jeweiligen Material-Schicht (2) zu bewegt wird, bis dieses die Material-Schicht durchtrennt.

17. Verfahren zur Herstellung eines Bauteils durch Press-Verformung nach dem Patentanspruch 16, **dadurch gekennzeichnet, dass** ein Schneid-Element (330) einer am ersten (21) und/oder zweiten (22) Spannrahmen-Element angeordneten Schneid-Einrichtung (300) in der Schließ-Stellung der Spannrahmen-Elemente (21, 22, 23) derart positioniert wird, dass dieses in seiner Ausgangsstellung die in den Spannrahmen eingelegten Material-Schichten (1, 2) nicht berührt.

## Claims

1. A press forming tool for producing a component of at least one first material layer (1) and a second material layer (2) with at least one first tool part (11) and a second tool part (12) each with a three dimensional forming contour, wherein on placing of the first material layer (1) and the second material layer (2) in the device the forming contour of the first tool part (11) faces the first material layer and the forming contour of the second tool part (12) faces the second material layer, wherein the tool parts (11, 12) are clamped into a pressure provider in order to bring about the forming of the first material layer (1) and the second material layer (2) as well as the joining of the two material layers with each other through the moving-together of the first and the second tool part, as well as with a clamping frame device in order to hold the material layers in their closing position outside the contour region of the tool during the forming operation, wherein:
- the clamping frame device comprises a first clamping frame element (21), which by means of a first adjusting device (31) is moveable relative to the first tool part, a second clamping frame element (22) which by means of a second adjusting device (32) is moveable relative to the second tool part, and a third clamping frame element (23) which by means of a third adjusting device (33) is moveable relative to the first or second tool part and is arranged between the first and the second clamping frame element, and
- the press forming tool comprises at least one cutting device (100, 200, 300) with a cutting element (130, 230, 330) running by segments on the circumference of the tool parts (11, 12) seen in their opening and closing direction or entirely surrounding these for the cutting off of a projection of at least one of the material layers which is present during the press forming next to the tool parts (11, 12), which is moveable relative to at least one of the tool parts (11, 12),
**characterized in that** a cutting device (100, 200, 300) is arranged on the third clamping frame element (23).

2. The press forming tool for producing a component according to Patent claim 1,
**characterized in that** the cutting element (130, 230, 330) of the cutting device (100) arranged on the third clamping frame element (23) is an edge (123) of the clamping frame element (23) and the third clamping frame element relative to the first or second tool part (11, 12) in their closed position is moveable in such a manner that the edge interacts with a corresponding contact region of the first or second tool part (11, 12) in order to be able to sever a projection of the first or second material layer (1, 2).

3. The press forming tool for producing a component according to Patent claim 1 or 2, **characterized in that** the cutting element (130, 230, 330) of the cutting device (100) arranged on the third clamping frame element (23) comprises an arranged knife (230) which by means of an adjusting device is moveable on the third clamping frame element (23) and transversely to the opening and closing movement of the tool parts (11, 12) in order to be able to severe a projection of the first or second material layer (1, 2).

4. The press forming tool according to Patent Claim 3, **characterized in that** the cutting element of the cutting device (100, 200) can be positioned in such a manner that upon moving-together of the tools (11, 12) the cold flowing of the material layers (1, 2) placed in the clamping frames is not impeded.

5. The press forming tool for producing a component according to any one of the preceding patent claims, **characterized in that** the cutting device (300) is arranged on the first (21) and/or second (22) clamping frame element and the cutting element (330) is a knife (330) arranged on this clamping frame element (21, 22) by means of an adjusting device, which knife is moveable at an angle to or in the direction of the opening and closing movement of the tool parts (11, 12).

6. The press forming tool according to Patent claim 5, **characterized in that** the cutting device (300) is embodied in such a manner that in the closing position of the clamping frame elements (21, 22, 23) the knife (330) can be positioned in such a manner that in its starting position it does not touch the material layers (1, 2) placed in the clamping frame.

7. The press forming tool according to any one of the Patent claims 5 or 6,
**characterized in that** the cutting device (300) is embodied in such a manner that the knife (330) in its cutting position at least partially protrudes through the first or second clamping frame element (21, 22).

8. The press forming tool according to any one of the preceding patent claims,
**characterized in that** the cutting element (130, 230, 330) of the cutting device (300) can be heated by means of a heating device.

9. The press forming tool according to Patent claim 8, **characterized in that** the heating device of the cutting element (130, 230, 330) comprises a holder for at least one heating cartridge insertable in said heating device.

10. The press forming tool according to Patent claim 9, **characterized in that** the heating device of the cutting element (130, 230, 330) comprises an electric resistance heating.

11. The press forming tool according to any one of the Patent claims 3 to 10,
**characterized in that** the moveability of the knife is brought about by an electric, hydraulic or pneumatic drive.

12. The press forming tool according to any one of the preceding Patent claims 3 to 10, **characterized in that** moveability of the knife is brought about through a manual actuation device.

13. The press forming tool according to any one of the preceding patent claims,
**characterized in that** at least one of the two clamping frames (21, 22) is assigned a device for tempering the clamping frame.

14. A method for producing a component through press forming of a first and a second material layer wherein a joining of the two layers within the forming contours (13, 14) of two tool parts (11, 12) is effected through their moving together, wherein in a starting position the first (11) and the second (12) tool part are moved apart, wherein
(a) moving of a first clamping frame element (21) and a second clamping frame element (22) into a position moved apart relative to each other and placing of the first material layer (1) between the two tool parts and between the first clamping frame element (23) arranged between the first and the second clamping frame element and placing of the second material layer (2) between the two tool parts and between the second (22) and the third clamping frame element (23), wherein the first, second and the third clamping frame element are arranged outside the forming contour of the tool parts,
(b) moving together of the first (21) second (22) and third (23) clamping frame element in a position in which the first (1) and the second (2) material layer are held through the first clamping frame element and the third clamping frame element and the second clamping frame element and the third clamping frame element respectively,
(c) moving together of the tool parts (11, 12) relative to each other subject to the forming of the first and the second material layer in the region of the forming contours (13, 14) of the tool parts (11, 12),
(d) by means of a cutting device (100, 200, 300), cutting off of a projection of at least one of the material layers emerging from the first (11) and the second (12) tool part,
(e) moving apart of the tool parts (11, 12) and the clamping frame elements (21, 22, 23) in order to be able to remove from the tool the first and second material layer (1, 2) joined together,
**characterized in that** the third clamping frame element (23) is moved into a lower position so that a cutting edge (123) arranged on the third clamping frame element (23) at a minor spacing in an opposite position (120) moves past the first or second clamping frame element (21, 22) at which the projection of the material layer in contact with said opposite position is cut off.

15. The method for producing a component through press forming according to Patent claim 14, **characterized in that** the third clamping frame element (21, 22) is positioned in such a manner that upon moving together of the tools (11, 12) the cold flowing of the material layers (1, 2) placed into the clamping frames is not impeded.

16. The method for producing a component through press forming according to Patent claim 14, **characterized in that** a moveable knife (230) arranged on the third clamping frame element (23) is moved towards the projection of the respective material layer (2) emerging between the first and the second tool part until it severs the material layer.

17. The method for producing a component through press forming according to Patent claim 16, **characterized in that** a cutting element (330) of a cutting device (300) arranged on the first (21) and/or second clamping frame element is positioned in the closing position of the clamping frame elements (21, 22, 23) in such a manner that in its starting position it does not touch the material layers (1, 2) placed in the clamping frame.

## Revendications

1. Outil de moulage à la presse pour fabriquer un composant à partir d'au moins une première couche de matériau (1) et une deuxième couche de matériau (1) comportant au moins une première partie d'outil (11) et une deuxième partie d'outil (12) possédant respectivement un contour de façonnage en trois dimensions, dans lequel lors d'une pose de la première couche de matériau (1) et de la deuxième couche de matériau (2) dans le dispositif, le contour de façonnage de la première partie d'outil (11) est tourné vers la première couche de matériau et le contour de façonnage de la deuxième partie d'outil (12) est tourné vers la deuxième couche de matériau, dans lequel les parties d'outil (11,12) sont encastrées dans un transmetteur de pression, afin de provoquer le moulage de la première couche de matériau (1) et de la deuxième couche de matériau (2) ainsi que la liaison des deux couches de matériau l'une à l'autre en déplaçant conjointement la première et la deuxième partie d'outil, ainsi qu'un dispositif de cadre de serrage, afin de maintenir les couches de matériau pendant le processus de moulage à l'extérieur de la zone de contour de l'outil dans leur position de fermeture, dans lequel :
- le dispositif de cadre de serrage comprend un premier élément de cadre de serrage (21), lequel est déplaçable au moyen d'un premier dispositif de réglage (31) par rapport à la première partie d'outil, un deuxième élément de cadre de serrage (22), lequel est déplaçable au moyen d'un deuxième dispositif de réglage (32) par rapport à la deuxième partie d'outil, et un troisième élément de cadre de serrage (23), qui est déplaçable au moyen d'un troisième dispositif de réglage (33) par rapport à la première ou la deuxième partie d'outil et est disposé entre le premier et le deuxième élément de cadre de serrage, et
- l'outil de moulage à la presse comprend au moins un dispositif de découpe (100,200,300) comportant un élément de découpe (130,230,330) s'étendant de manière segmentée sur la circonférence des parties d'outil (11,12) ou entourant complètement celle-ci vu dans sa direction d'ouverture et de fermeture afin de découper un débord d'au moins une des couches de matériau, présent lors du moulage à la presse à côté des deux parties d'outils (11,12), lequel est déplaçable par rapport à au moins une des parties d'outil (11,12),
**caractérisé en ce que** un dispositif de découpe (100,200,300) est disposé sur le troisième élément de cadre de serrage (23).

2. Outil de moulage à la presse pour fabriquer un composant selon la revendication 1, **caractérisé en ce que** l'élément de découpe (130,230,330) du dispositif de découpe (100) disposé sur le troisième élément de cadre de serrage (23) est une arête (123) de l'élément de cadre de serrage (23) et le troisième élément de cadre de serrage est déplaçable par rapport à la première ou la deuxième partie d'outil (11,12) dans sa position fermée de telle sorte que l'arête coopère avec une zone d'appui correspondante de la première, resp. la deuxième partie d'outil (11,12), afin de pouvoir séparer un débord de la première ou la deuxième couche de matériau (1,2).

3. Outil de moulage à la presse pour fabriquer un composant selon la revendication 1 ou 2, **caractérisé en ce que** l'élément de découpe (130,230,330) du dispositif de découpe (100) disposé sur le troisième élément de cadre de serrage (23) comprend une lame (230) disposée, qui est déplaçable au moyen d'un dispositif de réglage sur le troisième élément de cadre de serrage (23) et transversalement au mouvement d'ouverture et de fermeture des parties d'outil (11,12), afin de pouvoir séparer un débord de la première ou la deuxième couche de matériau (1,2).

4. Outil de moulage à la presse selon la revendication 3, **caractérisé en ce que** l'élément de découpe du dispositif de découpe (100,200) peut être positionné de telle sorte que lors du déplacement conjoint des outils (11,12) l'écoulement postérieur des couches de matériau (1,2) posées dans les cadres de serrage ne soit pas empêché.

5. Outil de moulage à la presse pour fabriquer un composant selon une des revendications précédentes, **caractérisé en ce que** le dispositif de découpe (300) est disposé sur le premier (21) et/ou le deuxième (22) élément de cadre de serrage, et l'élément de découpe (330) est une lame (330) disposée sur cet élément de cadre de serrage (21,22) au moyen d'un dispositif de réglage, qui est déplaçable à un angle par rapport à ou dans la direction du mouvement d'ouverture et de fermeture des parties d'outil (11,12).

6. Outil de moulage à la presse selon la revendication 5, **caractérisé en ce que** le dispositif de découpe (300) est configuré de telle sorte que dans la position de fermeture des éléments de cadre de serrage (21,22,23) la lame (330) puisse être positionnée de telle sorte que celle-ci ne contacte pas dans sa position de départ les couches de matériau (1,2) posées dans les cadres de serrage.

7. Outil de moulage à la presse selon une des revendications 5 ou 6, **caractérisé en ce que** le dispositif de découpe (300) est configuré de telle sorte que la lame (330) dans sa position de découpe dépasse au moins partiellement à travers le premier, resp. le deuxième élément de cadre de serrage (21,22).

8. Outil de moulage à la presse selon une des revendications précédentes,
**caractérisé en ce que** l'élément de découpe (130,230,330) du dispositif de découpe (300) peut être chauffé au moyen d'un dispositif de chauffage.

9. Outil de moulage à la presse selon la revendication 8, **caractérisé en ce que** le dispositif de chauffage de l'élément de découpe (130,230,330) présente un réceptacle destiné à au moins une cartouche chauffante à placer dans celui-ci.

10. Outil de moulage à la presse selon la revendication 9, **caractérisé en ce que** le dispositif de chauffage de l'élément de découpe (130,230,330) présente un chauffage à résistance électrique.

11. Outil de moulage à la presse selon une des revendications 3 à 10, **caractérisé en ce que** la mobilité de la lame est assurée par un entraînement électrique, hydraulique ou pneumatique.

12. Outil de moulage à la presse selon une des revendications précédentes 3 à 10,
**caractérisé en ce que** la mobilité de la lame est assurée par un dispositif d'actionnement manuel.

13. Outil de moulage à la presse selon une des revendications précédentes,
**caractérisé en ce que** au moins un des deux cadres de serrage (21,22) est coordonné à un dispositif de tempérage du cadre de serrage.

14. Procédé de fabrication d'un composant par moulage à la presse d'une première et d'une deuxième couche de matériau, dans lequel une liaison des deux couches s'effectue à l'intérieur des contours de façonnage (13,14) des deux parties d'outil (11,12) en les déplaçant conjointement, moyennant quoi dans une position de départ la première (11) et la deuxième (12) partie d'outil sont éloignées l'une de l'autre, comprenant les étapes consistant à:
(a) déplacer un premier élément de cadre de serrage (21) et un deuxième élément de cadre de serrage (22) dans une position rapprochée l'une de l'autre et poser la première couche de matériau (1) entre les deux parties d'outil et entre le premier et un troisième élément de cadre de serrage (23) disposé entre le premier et le deuxième élément de cadre de serrage et poser la deuxième couche de matériau (2) entre les deux parties d'outil et entre le deuxième (22) et la troisième élément de cadre de serrage (23), moyennant quoi le premier, deuxième et troisième élément de cadre de serrage sont disposés à l'extérieur du contour façonné des parties d'outil,
(b) déplacer conjointement le premier (21), deuxième (22) et troisième (23) élément de cadre de serrage en une position, dans laquelle la première (1) et la deuxième (2) couche de matériau sont maintenues par le premier élément de cadre de serrage et le troisième élément de cadre de serrage, resp. le deuxième élément de cadre de serrage et le troisième élément de cadre de serrage,
(c) déplacer conjointement les parties d'outil (11,12) l'une par rapport à l'autre en façonnant la première et la deuxième couche de matériau au niveau des contours de façonnage (13,14) des parties d'outil (11,12),
(d) au moyen d'un dispositif de découpe (100,200,300), découper un débord d'au moins une des couches de matériau, dépassant entre la première (11) et la deuxième (12) partie d'outil,
(e) éloigner les uns des autres les parties d'outil (11,12) et les éléments de cadre de serrage (21,22,23), afin de pouvoir retirer de l'outil la première et la deuxième couche de matériau (1,2) reliées l'une à l'autre,
**caractérisé en ce que** le troisième élément de cadre de serrage (23) est déplacé en une position inférieure, de sorte que une arête de découpe (123) disposée sur le troisième élément de cadre de serrage (23) s'avance avec un faible espacement sur une butée de fond (120) sur le premier ou le deuxième élément de cadre de serrage (21,22), dans lequel le débord de la couche de matériau venant respectivement reposer sur celle-ci est découpé.

15. Procédé de fabrication d'un composant par moulage à la presse selon la revendication 4, **caractérisé en ce que** le troisième élément de cadre de serrage (21,22) est positionné de telle sorte que lors du déplacement conjoint des outils (11,12), l'écoulement postérieur des couches de matériau (1,2) posées dans les cadres de serrage ne soit pas empêché.

16. Procédé de fabrication d'un composant par moulage à la presse selon la revendication 14, **caractérisé en ce que** une lame (230) déplaçable disposée sur le troisième élément de cadre de serrage (23) doit être déplacée sur le débord de la couche de matériau respective (2) dépassant entre la première et la deuxième partie d'outil, jusqu'à ce qu'elle-ci sectionne la couche de matériau.

17. Procédé de fabrication d'un composant par moulage à la presse selon la revendication 16, **caractérisé en ce que** l'élément de découpe (330) d'un dispositif de découpe (300) disposé sur le premier (21) et/ou le deuxième (22) élément de cadre de serrage est positionné dans la position de fermeture des éléments de cadre de serrage (21,22,23) de telle sorte que celui-ci dans sa position de départ ne contacte pas les couches de matériau (1,2) posées dans les cadres de serrage.
